# FASCICULE DE BREVET EUROPEEN

(11) **EP 1 096 820 B1**
(45) Date de publication et mention de la délivrance du brevet: **30.03.2005**
(21) Numéro de dépôt: 00402907.0
(22) Date de dépôt: 19.10.2000
(51) Int. Cl.: H04Q 7/32, H04M 1/02

(54) **Téléphone mobile comportant un connecteur amovible entre son corps et son boîtier de batterie**
Mobiltelefon mit einer lösbaren Verbindung zwischen seinem Gehäuse und seinem Batteriegehäuse
Mobile phone comprising a detachable connector between its body and its battery housing

(30) Priorité: 27.10.1999 FR 9913443
(43) Date de publication de la demande: 02.05.2001
(73) Titulaire: SAGEM SA, 75015 Paris (FR)
(72) Inventeur: Delacourte, Bruno, 95290 L'Isle Adam (FR)
(74) Mandataire: Schmit, Christian Norbert Marie

(56) Documents cités:
- EP-A- 1 138 124
- WO-A-96/24197
- DE-A- 4 401 469
- US-A- 5 066 235
- US-A- 5 749 754

## Description

L'invention a pour objet un téléphone mobile comportant un connecteur amovible situé entre son corps et son boîtier de batterie. Le domaine de l'invention est la téléphonie mobile. Cependant ce domaine peut s'étendre à tous les domaines qui mettent en oeuvre des appareils électroniques modulaires. En effet en fonction des modules électroniques choisis pour une application, on peut avoir besoin ou pas d'une connexion entre ces modules choisis, il est donc intéressant que le connecteur soit amovible.

Le but de l'invention est de réduire le coût du corps d'un téléphone mobile. En effet à l'heure à actuelle on intègre dans les boîtiers de batterie de plus en plus de fonctionnalités. Il faut donc établir une connexion fonctionnelle entre le boîtier de batterie et le corps du téléphone mobile auquel le boîtier sera fixé. Cette liaison est établie via un connecteur du corps, et des contacts du boîtier.

Dans l'état de la technique on connaît les téléphones mobiles qui comporte des boîtiers de batterie dotés de différentes fonctionnalités, comme un lecteur de cartes à puce par exemple. La liaison fonctionnelle entre le corps du téléphone mobile et le lecteur de cartes à puce est alors établie grâce à un connecteur du corps. Le connecteur du corps qui est constitué par des picots rétractables, par exemple, vient appuyer sur des contacts du boîtier de batterie. Une connexion est alors établie de manière satisfaisante puisque les contacts de la batterie viennent appuyer sur les picots du corps. Une telle réalisation est enseignée par le document DE 4401469 A1.

Cependant cette solution n'est pas entièrement satisfaisante puisque le coût d'implantation du connecteur doit être supporté par tous les utilisateurs du corps, y compris ceux qui utilise une batterie ne comportant pas de fonctionnalité autre que l'alimentation du corps.

En effet dans l'état de la technique le connecteur du corps est intégré d'origine de façon inamovible par l'utilisation dans le corps et les pièces qui composent ce corps. Le but étant de réaliser une économie d'échelle, il est intéressant d'avoir le même moule quelles que soient les options et les fonctionnalités du téléphone que l'on souhaite produire. C'est pour cette raison qu'il n'est pas non plus judicieux d'intégrer un connecteur du côté de la batterie et des contacts sur le téléphone. En effet on obtiendrait ainsi des corps de téléphone mobile identiques, mais le connecteur placé sur le boîtier de batterie ne serait pas utile à chaque fois et constituerait donc un surcoût pour certains modèles.

L'invention résout ces problèmes en utilisant un connecteur amovible que l'on place entre le corps du téléphone mobile et le boîtier de batterie. Le connecteur est alors mis en place uniquement lorsqu'il est nécessaire, c'est-à-dire lorsque l'on connecte sur le corps du téléphone une batterie comportant des fonctionnalités annexes. Le connecteur amovible est alors fixé soit sur le corps du téléphone soit sur la batterie. Dans une réalisation préférée il est fixé sur le corps du téléphone mobile. Ainsi quel que soit le corps du téléphone mobile et la batterie qui lui est accouplée, l'interface physique entre le corps et le boîtier de batterie sera identique. Le boîtier de batterie comporte des contacts en vue d'établir une connexion avec le connecteur amovible, et le corps du téléphone comporte un réceptacle pour le connecteur amovible.

L'invention a donc pour objet un téléphone mobile comportant un corps du téléphone mobile et un boîtier de batterie caractérisé en ce qu'il comporte un connecteur amovible qui assure la conduction d'un signal entre des contacts situés d'une part sur le corps du téléphone mobile, d'autre part sur le boîtier batterie.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:
Figure 1: une illustration d'un corps de téléphone mobile et d'un boîtier de batterie selon l'invention.
Figure 2 : une illustration de détail d'un connecteur selon l'invention et de son réceptacle sur le corps du téléphone.

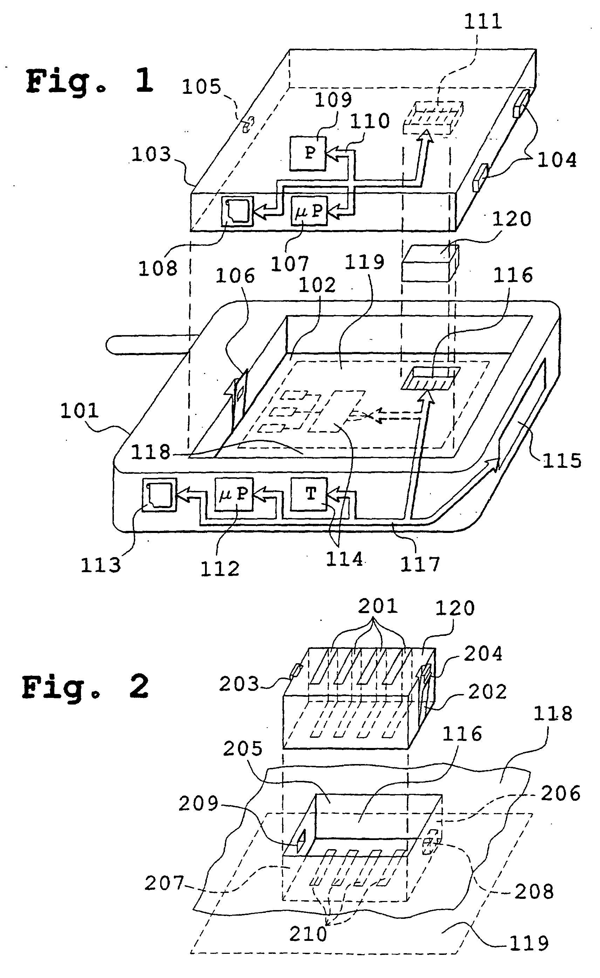

La figure 1 montre un téléphone 101 mobile comportant une cavité 102 destinée à recevoir un boîtier 103 de batterie. Pour pouvoir être fixé au téléphone 101 le boîtier 103 comporte des ergots 104 et une fente 105. En général les ergots sont situés sur le bas du boîtier et la fente sur la haut du boîtier. Il est entendu que par haut on entend le côté où se situe le haut-parleur du téléphone 101, et par bas le côté où se situe le micro. On oriente ainsi la batterie 103 par rapport au téléphone 101. Alors les ergots sont introduits dans des fentes du téléphone 101 non représenté sur la figure 1, puis on bascule la batterie 103 dans la cavité 102. Le bord supérieur de la cavité 102 comporte un clip 106.

Un clip est un verrou élastique, c'est-à-dire par exemple une lame montée de manière élastique et comportant un ergot destiné à être introduit dans une fente. Dans sa position de repos, l'ergot du clip est introduit dans la fente. Lorsqu'on déplace le clip, cela a pour effet de libérer l'ergot de la fente et donc de rendre la batterie 103 amovible.

La batterie 103 comporte aussi un microprocesseur 107, une mémoire 108 et un circuit 109 de périphérie. Les éléments 107 à 109 sont connecté par un bus 110. Le bus 110 est d'autre part connecté à des contacts 111. Dans la pratique la batterie 103 ne comporte pas forcément de microprocesseur 107, de mémoire 108 ou de circuit 109 de périphérique. Ils ont été cités et représentés à titre d'exemple. Il s'agit de montrer que la batterie 103 comporte des circuits électroniques réalisant une fonction et pouvant être interconnectés par l'intermédiaire des contacts 111 avec un autre dispositif électronique, un corps de téléphone mobile par exemple. Le circuit 109 peut être par exemple un lecteur de cartes à puce, un organiseur ou un module de communication. La mémoire 108 contient des codes d'instruction qui commandent le microprocesseur 107 afin que celui-ci puisse exploiter le circuit 109. Les contacts 111 permettent au microprocesseur 107 de communiquer avec le corps 101 du téléphone.

Le corps 101 comporte un microprocesseur 112, une mémoire 113, et des circuits 114 pour son activité de téléphonie mobile. Pour pouvoir communiquer avec différents périphériques, le téléphone 101 comporte aussi un port 115 de service permettant de connecter le téléphone à des appareils périphériques externes, et un port 116. Le port 116 est situé à l'intérieur de la cavité 102. C'est grâce au port 116 que le téléphone 101 peut se connecter au périphérique dans la batterie 103. Les éléments 112 à 116 sont connectés entre eux par l'intermédiaire d'un bus 117. Le bus comporte tous les fils ou pistes nécessaires à la propagation des signaux utiles pour le bon fonctionnement des différents éléments compris dans le téléphone. C'est-à-dire qu'il comprend des fils destinés à véhiculer des signaux d'adresse, de commande et de données. Dans la pratique il se peut que les ports 115 et 116 ne soient pas accessibles directement par le bus, mais par l'intermédiaire d'une interface électronique. Ces interfaces ne sont ni représentées ni décrites car elles existent et sont utilisées de manière courante.

La cavité 102 comporte un capot 118 qui est destiné à protéger et à isoler un circuit imprimé 119. C'est sur ce circuit imprimé que sont implantés les différents composants réalisant la fonction de téléphonie du corps 101. Le port 116 possède des contacts métallisés, qui sont aussi sur ce circuit 119 imprimé. Le capot 118 comporte donc une cavité permettant d'accéder au contact du port 116. Cette cavité n'est pas une simple ouverture dans le capot 118. Cette cavité possède en effet des parois qui vont du capot 118 au circuit 119 imprimé. Dans la pratique les composants 114 peuvent être radiatifs c'est-à-dire émettre des ondes électromagnétiques donc il faut éviter la propagation afin qu'elle ne perturbe pas les différents appareils électroniques existants alentour du corps 101. Pour cette raison le capot 118 peut être le blindage du circuit 119 imprimé. Dans ce cas la cavité du capot 118 ne constitue pas une rupture de la protection électromagnétique. En effet les contacts du port 116 ne véhiculent pas de signaux radio à haute fréquence. Les contacts ne sont donc pas radiatifs et le fait qu'ils soient à l'air libre ne risque pas de perturber le fonctionnement des appareils électroniques environnant le corps 101.

La figure 1 montre aussi un connecteur 120 amovible. Le connecteur 120 s'insère dans la cavité du port 116 et est maintenu en place par des moyens du port. Une fois en place le connecteur 120 permet d'assurer la continuité entre les contacts du port 116 et les contacts 111 de la batterie 103. Une fois en place le connecteur 120 est maintenu, mais il peut être retiré. Il est donc envisageable de glisser plusieurs types de connecteurs 120 amovibles en fonction des besoins ou du type du connecteur 111 existant sur la batterie 103.

La figure 2 détaille le connecteur 120 et le port 116. Dans l'exemple représenté le connecteur 120 comporte des lames 201 qui assurent la transmission des signaux entre les contacts du port 116 et les contacts 111. Les lames 201 sont constituées chacune de trois segments. On considère que la partie inférieure du connecteur 120 est celle qui est située la plus proche du circuit 119 une fois que le connecteur 120 est en place. Une lame 201 est fixée au connecteur 120 par un des bords latéraux du connecteur. Cette partie de lame au contact du connecteur constitue un segment de cette lame, il s'agit du segment central. Les extrémités de la lame sont alors repliées de part et d'autre du connecteur mais en conservant une certaine distance par rapport au connecteur, et une certaine élasticité. Ces lames sont réalisées dans un métal élastique. Ainsi il y a un effet de ressort au niveau de l'extrémité des lames. Le connecteur 120 comporte aussi des clips 202 et 203. Les clips 202 et 203 sont situés sur des bords latéraux, de préférence opposés du connecteur. Les clips 202 et 203 comportent des ergots. L'ergot du clip 202 est représenté sur la figure 2, c'est l'ergot 204. Le clip 202 est fixé de manière élastique au connecteur 120. Dans sa position de repos l'une des extrémités du clip 202, l'extrémité inférieure, est fixée sur le connecteur 120. Toujours au repos, l'extrémité supérieure du clip 202 est éloignée du connecteur 120. L'extrémité supérieure du clip 202 peut être rapprochée du connecteur 120. Mais l'élasticité du clip 202 le ramène dans sa position de repos dès que l'on cesse d'exercer un effort sur lui.

Le mode de maintient du connecteur amovible par des clips tel que décrits est un exemple. Dans la pratique il existe d'autre mode de réalisation pour un dispositif de maintient du connecteur amovible. Par exemple des renflements circulaires du connecteur d'amovible peuvent s'adapter à des enfoncements de même forme du corps.

La figure 2 montre aussi le port 116. Le port 116 est constitué par une cavité 205 pratiquée dans le capot 118. La cavité 205 possède des parois 206 et 207. Les parois 206 et 207 possèdent des fentes 208 et 209 destinées à recevoir les ergots des clips 202 respectivement 203. Au fond de la cavité 205 on trouve les contacts 210 du port 116. Ces contacts 210 sont connectés au microprocesseur 112 via le bus 117 et éventuellement une interface. Lorsqu'on introduit le connecteur 120 dans la cavité 205, et que l'on appuie pour l'enfoncer au fond, les ergots des clips 202 et 203 viennent se ficher dans les fentes 208 et 209. Les extrémités des lames 201 sont alors au contact des contacts 210. Si l'on souhaite retirer le connecteur 120 il suffit de pincer les clips 204 et 203, l'élasticité des lames 201 repousse alors le connecteur 120 vers le haut. L'autre extrémité des lames 201 assure le contact avec les contacts 111 de la batterie 103, lorsque celle-ci est en place.

Dans une variante de l'invention, on aurait pu placer les clips sur les parois de la cavité 205 et les fentes sur les bords du connecteur 120. Cela ne change rien des caractéristiques principales du connecteur 120 qui sont d'assurer la connexion entre le téléphone 101 et les périphériques situés dans la batterie 103, ainsi que son amovibilité.

De même dans une autre variante on aurait pu placer le connecteur amovible sur la batterie 103.

## Revendications

1. Téléphone mobile comportant un corps (101) du téléphone mobile et un boîtier (103) de batterie **caractérisé en ce qu'**il comporte un connecteur (120) amovible qui assure la conduction d'un signal entre des contacts (111, 116) situés d'une part sur le corps du téléphone mobile, d'autre part sur le boîtier de batterie, la conduction étant assurée via des moyens métalliques élastiques du connecteur amovible.

2. Téléphone selon la revendication 1, **caractérisé en ce que** le corps comporte des moyens (208, 209) pour maintenir le connecteur amovible.

3. Téléphone selon l'une des revendications 1 ou 2, **caractérisé en ce que** les contacts (210) sont répartis sur une zone de contact d'un circuit (119) imprimé du corps, le circuit imprimé est protégé par un capot (118), le capot encadrant la zone de contact sans la recouvrir, le capot comporte donc un enfoncement qui arrive au niveau du circuit imprimé autour de la zone de contact.

4. Téléphone selon l'une des revendications 1 ou 3, **caractérisé en ce que** le connecteur amovible comporte des clips (203, 204) qui s'insèrent dans des fentes d'un capot du corps.

5. Téléphone selon l'une des revendications 3 ou 4, **caractérisé en ce que** le capot est un blindage.

6. Téléphone selon l'une des revendications 1 à 5, **caractérisé en ce que** le boîtier comporte des moyens pour maintenir le connecteur amovible.

## Claims

1. Mobile telephone comprising a body (101) of the mobile telephone and a battery pack (103), ***characterised in that*** it comprises a detachable connector (120) which ensures conduction of a signal between contacts (111, 116) situated firstly on the body of the mobile telephone, and secondly on the battery pack, the conduction being assured via elastic metal means of the detachable connector.

2. Telephone according to claim 1, ***characterised in that*** the body comprises means (208, 209) for holding the detachable connector.

3. Telephone according to one of claims 1 or 2, ***characterised in that*** the contacts (210) are distributed over a contact zone of a printed circuit (119) of the body, the printed circuit is protected by a cap (118), the cap framing the contact zone without covering it, the cap thus comprises an indentation which extends to the level of the printed circuit around the contact zone.

4. Telephone according to one of claims 1 or 3, ***characterised in that*** the detachable connector comprises clips (203, 204) which are inserted in slots in a cap of the body.

5. Telephone according to one of claims 3 or 4, ***characterised in that*** the cap is a screen.

6. Telephone according to one of claims 1 to 5, ***characterised in that*** the pack comprises means for holding the detachable connector.

## Patentansprüche

1. Die Erfindung betrifft ein Mobiltelefon mit einem Gehäuse (101) des Mobiltelefons und einem Batteriegehäuse (103), **dadurch gekennzeichnet, dass** es eine lösbare Verbindung (120) aufweist, die die Leitung eines Signals zwischen Kontakten (111, 116) gewährleistet, die zum einen am Gehäuse des Mobiltelefons, zum anderen am Gehäuse der Batterie liegen, wobei die Leitung durch elastische metallische Mittel der lösbaren Verbindung gewährleistet wird.

2. Telefon nach Anspruch 1, **dadurch gekennzeichnet, dass** das Gehäuse des Mobiltelefons Mittel (208, 209) aufweist, um die lösbare Verbindung in ihrem Platz zu halten.

3. Telefon nach einem der Ansprüche 1 oder 2, **dadurch gekennzeichnet, dass** die Kontakte (210) über eine Kontaktzone einer gedruckten Schaltung (119) des Mobiltelefongehäuses verteilt sind, dass die gedruckte Schaltung von einer Abdeckung (118) geschützt wird, wobei die Abdeckung die Kontaktzone umrahmt, ohne sie zu bedecken, dass die Abdeckung folglich eine Aussparung aufweist, die bis zur gedruckten Schaltung um die Kontaktzone reicht.

4. Telefon nach einem der Ansprüche 1 oder 3, **dadurch gekennzeichnet, dass** die lösbare Verbindung Clips (203, 204) aufweist, die sich in Spalten einer Abdeckung des Mobiltelefongehäuses einfügen.

5. Telefon nach einem der Ansprüche 3 oder 4, **dadurch gekennzeichnet, dass** die Abdeckung eine Isolationsfunktion hat.

6. Telefon nach einem der Ansprüche 1 bis 5, **dadurch gekennzeichnet, dass** das Batteriegehäuse Mittel aufweist, um die lösbare Verbindung in ihrem Platz zu halten.
